# EUROPÄISCHE PATENTSCHRIFT

(11) **EP 3 690 406 B1**
(45) Veröffentlichungstag und Bekanntmachung des Hinweises auf die Patenterteilung: **18.06.2025**
(21) Anmeldenummer: 20152867.6
(22) Anmeldetag: 21.01.2020
(51) Int. Cl.: G01D 4/00

(54) **VERBRAUCHSWERTERFASSUNGSEINHEIT UND VORRICHTUNG ZUR ÜBERMITTLUNG VON DATEN EINER SOLCHEN VERBRAUCHSWERTERFASSUNGSEINHEIT**
CONSUMPTION VALUE DETECTION UNIT AND DEVICE FOR TRANSMITTING DATA OF SUCH A CONSUMPTION VALUE DETECTION UNIT
UNITÉ DE DÉTECTION DE LA CONSOMMATION ET DISPOSITIF DE TRANSMISSION DES DONNÉES D'UNE TELLE UNITÉ DE DÉTECTION DE LA CONSOMMATION

(30) Priorität: 01.02.2019 DE 102019102555
(43) Veröffentlichungstag der Anmeldung: 05.08.2020
(73) Patentinhaber: QUNDIS GmbH, 99098 Erfurt (DE)
(72) Erfinder: NOVAK, Darko, 2000 Maribor (SI); KRAMBERGER, Iztok, 2000 Maribor (SI); PIHLER, Darko, 2000 Maribor (SI)
(74) Vertreter: Liedtke & Partner Patentanwälte

(56) Entgegenhaltungen:
- EP-A1- 3 367 694
- DE-A1- 102008 014 013
- DE-A1- 102018 004 566
- US-A1- 2014 327 553
- US-A1- 2015 282 172
- US-A1- 2017 264 508

## Beschreibung

Die Erfindung betrifft eine Verbrauchswerterfassungseinheit, insbesondere einen Verbrauchszähler, mit zumindest einem Messgerät zur Erfassung von Daten, insbesondere Verbrauchsdaten. Weiterhin betrifft die Erfindung eine Vorrichtung zur Übermittlung von Daten, insbesondere Verbrauchsdaten, einer solchen Verbrauchswerterfassungseinheit.

Aus dem Stand der Technik sind Verbrauchswerterfassungseinheiten mit Messgeräten, wie Messzählern, bekannt. Das Messgerät erfasst Messwerte, wobei die Verbrauchswerterfassungseinheit aus den Messwerten resultierende Verbrauchsdaten bereitstellt.

Ferner sind Vorrichtungen allgemein bekannt, die zur Auslesung von Zählerdaten von Verbrauchswerterfassungseinheiten, insbesondere Verbrauchszählern, wie Wasser-, Strom- oder Gaszählern ausgebildet sind. Derartige Verbrauchswerterfassungseinheiten sind beispielsweise an Verbrauchsstellen in einem Gebäude oder einem Raum installiert. Aus der US 2017/0264508 A1, DE 10 2018 004 566 A1 und EP 3 367 694 A1 sind jeweils Messsysteme bzw. Zähler bekannt, deren gemessene Daten über eine Funkverbindung ausgelesene werden können.

Versorgungsunternehmen, wie beispielsweise Energieversorgungsunternehmen oder Wasserversorgungsunternehmen, erfassen üblicherweise zur Erstellung von Verbrauchsabrechnungen für Kunden als Daten Verbrauchsdaten von diesen Verbrauchswerterfassungseinheiten. Die Verbrauchsdaten werden dabei beispielsweise von der Verbrauchswerterfassungseinheit erfasst und für zurückliegende Verbrauchsperioden in einem nicht lesbaren Format gespeichert und auf Anforderung an ein mobiles Gerät, insbesondere ein Auslesegerät, übertragen. Dabei stellen die Verbrauchsdaten für zurückliegende Verbrauchsperioden ein Maß für die innerhalb der zurückliegenden Verbrauchsperiode verbrauchte Menge des zu erfassenden Mediums, wie Wasser, Strom oder Gas dar.

Nachteilig dabei ist, dass der Verbraucher oder Kunde die übertragbaren Verbrauchsdaten vom Verbrauchszähler selbst nicht empfangen, lesen und damit überprüfen kann.

Der Erfindung liegt die Aufgabe zu Grunde, eine Verbrauchswerterfassungsvorrichtung, insbesondere einen Verbrauchszähler, mit zumindest einem Messgerät zur Erfassung von Daten, insbesondere Verbrauchsdaten, und eine Vorrichtung zur Übermittlung der Daten anzugeben, welche es ermöglicht, dass ein Verbraucher oder Kunde die Daten seiner Messgeräte selbst empfangen und überprüfen kann, wobei unabhängig dieser Überprüfung die Verbrauchsdaten zur Verbrauchsabrechnung an ein Versorgungsunternehmen übermittelbar sind.

Die Aufgabe wird erfindungsgemäß durch eine Vorrichtung mit den Merkmalen des Anspruchs 1 gelöst.

Vorteilhafte Ausgestaltungen der Erfindung sind Gegenstand der Unteransprüche. Die erfindungsgemäße Verbrauchswerterfassungseinheit, insbesondere ein erfindungsgemäßer Verbrauchszähler, umfasst zumindest ein Messgerät zur Erfassung von Daten. Das Messgerät umfasst zwei drahtlose Kommunikationsschnittstellen zur Übermittlung der erfassten Daten. Zum Beispiel sind mittels des Messgeräts Verbrauchsdaten, wie Messwerte, erfassbar und übermittelbar. Eine erste drahtlose Kommunikationsschnittstelle des Messgeräts ist ausgebildet, das Messgerät mit zumindest einem zentralen Server zu verbinden. Eine zweite drahtlose Kommunikationsschnittstelle des Messgeräts ist ausgebildet, das Messgerät mit zumindest einem mobilen Gerät eines Nutzers zu verbinden.

Die Verbrauchswerterfassungseinheit ist als ein stationärer, elektronischer Verbrauchszähler oder als ein einzelnes stationäres, elektronisches Verbrauchsmessgerät ausgebildet, der bzw. das als ein Montagemodul an einer zugehörigen Verbrauchsstelle oder -einheit, zum Beispiel einem Heizkörper, einer Wasserleitung, einer Gasleitung, einer Heizungs-, Kälte-, Solar- oder Warmwasseraufbereitungsanlage, angeordnet und montiert, zum Beispiel verschraubt ist. Die Verbrauchswerterfassungseinheit umfasst die Sensoreinheit, zum Beispiel einen 1- oder 2-Fühlermesssystem oder eine Messkapsel oder einen Flügelradgeber mit Abtastung, um Verbrauchsdaten, wie anteilige Wärmemengen, Wassermengen, Wärme- oder Kälteenergie, der zugehörigen Verbrauchseinheit, wie Heizkörper, Wasserleitung bzw. Klimaanlagen zu erfassen und zu bestimmen.

In einer Ausführungsform ist das Messgerät eine Sensoreinheit, welche die beiden drahtlosen Kommunikationsschnittstellen umfasst oder welche mit diesen drahtlosen Kommunikationsschnittstellen signaltechnisch verbunden ist. Dabei werden die vom Messgerät erfassten Daten an die drahtlosen Kommunikationsschnittstellen übertragen. Insbesondere umfasst das Messgerät zumindest einen Sensor, wie einen Zählersensor, zur Erfassung der Daten.

In einer Weiterbildung ist das Messgerät ausgebildet, als Daten Verbrauchsdaten über die erste Kommunikationsschnittstelle bereitzustellen. Zum Beispiel sind diese Verbrauchsdaten von dem zentralen Server, beispielsweise einem so genannten Cloud-Speicherplatz, empfangbar. Ein Versorgungsunternehmen kann die Verbrauchsdaten aus dem zentralen Server beziehen und für eine Verbrauchsabrechnung nutzen. Beispielsweise ist der zentrale Server eingerichtet, mit dem Messgerät beispielsweise über ein drahtloses oder drahtgebundenes Netzwerk, insbesondere ein Ethernet-Netzwerk, Daten, wie Verbrauchsdaten, auszutauschen. Zum Beispiel sendet das Messgerät die Verbrauchsdaten an den zentralen Server, wenn das Messgerät über die erste drahtlose Kommunikationsschnittstelle eine von dem zentralen Server ausgesendete Anforderung empfängt.

In einer möglichen Weiterbildung ist das Messgerät ausgebildet, als Daten Verbrauchsdaten und/oder statistische Daten über die zweite Kommunikationsschnittstelle bereitzustellen. Insbesondere kann der Nutzer des mobilen Geräts die Verbrauchsdaten in einfacher Weise über beispielsweise eine berührungsempfindliche Anzeigeeinheit des mobilen Geräts auswählen und in einer gewünschten grafischen Form darstellen lassen, insbesondere durch Tippen. Weiterhin sind die Verbrauchsdaten und/oder statistischen Daten mit einem Zeitstempel für weitere zeitabhängige Analysen und statistische Verarbeitung der Daten versehen. Zum Beispiel sendet das Messgerät die Verbrauchsdaten und/oder statistischen Daten an das mobile Gerät, wenn das Messgerät über die zweite drahtlose Kommunikationsschnittstelle eine von dem mobilen Gerät ausgesendete Anforderung empfängt. Insbesondere sind diese Verbrauchsdaten von dem mobilen Gerät, wie einem mobilen Endgerät, des Nutzers, beispielsweise eines Verbrauchers oder Kunden, empfangbar. Insbesondere müssen keine speziellen Empfangsgeräte genutzt werden. Beispielsweise muss ein herkömmliches Mobiltelefon des Nutzers lediglich eine mit der zweiten Kommunikationsschnittstelle koppelbare Schnittstelle aufweisen. Beispielsweise können die Daten, insbesondere Verbrauchsdaten, des Messgeräts auf dem mobilen Gerät mittels einer installierten Auslesesoftware empfangen und ausgelesen werden. Die Auslesesoftware ist beispielsweise in einfacher Weise auf ein herkömmliches mobiles Gerät installierbar. Zum Beispiel kann die Auslesesoftware von dem mobilen Gerät über einen Internetzugang runtergeladen werden. Auf dem mobilen Gerät sind die Verbrauchsdaten und/oder die statistischen Daten grafisch darstellbar. Insbesondere ermöglicht die Übermittlung der Verbrauchsdaten an das mobile Gerät eine Interaktion zwischen dem Verbraucher selbst und der Verbrauchswerterfassungseinheit. Der Verbraucher kann mittels der übermittelten Verbrauchsdaten und/oder statistischen Daten Analysen zum Verbrauch erstellen. Insbesondere bekommt der Verbraucher durch einen solchen Verbrauchsdateneinblick ein verbessertes Nutzungsbewusstsein in Bezug auf einen vergleichsweise effizienteren Energieverbrauch. Zudem kann der Verbraucher seine eigene Energienutzung überwachen.

In einer Weiterbildung ist es möglich, ein herkömmliches Messgerät mit nur einer Funkschnittstelle mit einer zweiten Kommunikationsschnittstelle auszustatten. Das Messgerät ist anschließend derart eingerichtet, die bereits vorhandene Funkschnittstelle mit dem zentralen Server oder mit dem mobilen Gerät und die zweite Kommunikationsschnittstelle mit jeweils dem anderen der beiden Verbindungspartner auf Anfrage zu koppeln.

Mittels der erfindungsgemäßen Bereitstellung von zwei Kommunikationsschnittstellen an dem Messgerät ist ermöglicht, über zwei unabhängig voneinander betreibbare Kommunikationsschnittstellen im Wesentlichen zeitgleich Verbrauchsdaten, insbesondere an unabhängige Empfänger, zu übermitteln. Des Weiteren ist ermöglicht, zwei unterschiedliche Kommunikationsschnittstellen bereitzustellen. Beispielsweise unterscheiden sich die Kommunikationsschnittstellen im Frequenzbereich. Zum Beispiel ist eine der Kommunikationsschnittstellen ausgebildet, Daten über eine längere Distanz zu übermitteln. Die andere Kommunikationsschnittstelle ist beispielsweise ausgebildet, Daten nur über eine kurze Distanz zu übermitteln. Die Übermittlung der Verbrauchsdaten ist nicht weiter durch vorgegebene Übertragungsfrequenzen- und/oder Übertragungsdistanzen beschränkt. Des Weiteren können die Kommunikationsschnittstellen jeweils unterschiedlichen Sicherheitsstandards, insbesondere Kommunikationssicherheiten, wie Übertragungssicherheiten, entsprechen. Beispielsweise sind die Kommunikationsschnittstellen jeweils als Funkschnittstelle ausgebildet.

Die Verbrauchswerterfassungseinheit umfasst gegenüber herkömmlichen Verbrauchszählern somit zwei separate Kommunikationsschnittstellen, wobei eine der Kommunikationsschnittstellen zumindest als eine gesicherte Kommunikationsschnittstelle und die andere Kommunikationsschnittstelle zumindest als eine öffentliche und/oder eine gesicherte Kommunikationsschnittstelle eingerichtet ist.

In einer möglichen Ausführungsform ist das Messgerät über die zweite Kommunikationsschnittstelle konfigurierbar ausgebildet. Beispielsweise sind Betriebsparameter des Messgeräts konfigurierbar. Mittels der zweiten Kommunikationsschnittstelle ist eine sichere Konfiguration für beispielsweise einen Installateur der Verbrauchswerterfassungseinheit und/oder des Messgeräts ermöglicht. Der Installateur oder eine andere autorisierte Person kann über die zweite Kommunikationsschnittstelle in Funktionen des Messgeräts eingreifen und diese einstellen. Zum Beispiel ist die Nutzung der zweiten Kommunikationsschnittstelle nur über autorisierte Zugangsdaten aktivierbar. Insbesondere kann der Nutzer des mobilen Geräts die Konfiguration sowohl des Messgeräts als auch der Verbrauchswerterfassungseinheit über beispielsweise die berührungsempfindliche Anzeigeeinheit des mobilen Geräts einstellen, insbesondere durch Tippen.

Gemäß einer Ausgestaltung umfasst das Messgerät eine Konfigurationseinheit. Die Betriebsparameter zum Betrieb des Messgeräts und/oder der Verbrauchswerterfassungseinheit sind in dieser Konfigurationseinheit hinterlegt. Über die zweite Kommunikationsschnittstelle ist eine Verbindung des mobilen Geräts mit der Konfigurationseinheit des Messgeräts und/oder der Verbrauchswerterfassungseinheit herstellbar.

In einer weiteren möglichen Ausführungsform ist das Messgerät und/oder die Verbrauchswerterfassungseinheit ausgebildet, vor einem Konfigurationszugang eine Authentifizierung des Nutzers, wie eines Versorgungsunternehmers, durchzuführen. Zum Beispiel ist das Messgerät ausgebildet, bei Erfassung eines Verbindungsaufbauversuchs über die zweite Kommunikationsschnittstelle Authentifikationsinformationen abzufragen. Nach einer erfolgreichen Authentifizierung des anfragenden Nutzers kann dieser auf die Betriebsparameter des Messgeräts und/oder die Verbrauchswerterfassungseinheit zugreifen.

Zum Beispiel umfassen die Betriebsparameter Konfigurations-, Kalibrier- und Steuerparameter des Messgerätes und/oder einer Komponente der Verbrauchswerterfassungseinheit, wie zum Beispiel einer Anzeigeeinheit. Die Betriebsparameter sind beispielsweise Betriebszeiten zugeordnet oder mit einem Zeitstempel versehen. Auch können zum Beispiel Messzeiten und/oder Messzyklen für das Messgerät vorgegeben und hinterlegt werden, wobei das Messgerät zu den hinterlegten Zeiten entsprechend zu einer Messzeit oder für einen Messzyklus aktiviert oder deaktiviert wird. Dadurch können ermittelte Verbrauchsdaten in Abhängigkeit zeitlich gekennzeichneter Betriebsparameter und/oder Betriebszustände betrachtet werden. Der Nutzer, beispielsweise der Installateur, kann über das mobile Gerät in einfacher Weise das Messgerät zum ordnungsgemäßen Betrieb einstellen. Zum Beispiel ist das Messgerät an Anforderungen einer physikalischen Umgebung anpassbar. Insbesondere kann auf spezielle Installationswerkzeuge mit spezifischen Kommunikationsschnittstellen verzichtet werden und durch das mobile Gerät ersetzt werden. Beispielsweise muss ein herkömmliches Mobiltelefon des Nutzers lediglich eine mit der zweiten Kommunikationsschnittstelle koppelbare Schnittstelle aufweisen. Über ein Applikationsprogramm und/oder eine geeignete Software ist das Messgerät über die zweite Kommunikationsschnittstelle konfigurierbar. Ein solches Applikationsprogramm und/oder eine solche Software sind bzw. ist beispielsweise in einfacher Weise auf das mobile Gerät installierbar. Zum Beispiel kann das Applikationsprogramm und/oder die Software von dem mobilen Gerät über einen Internetzugang runtergeladen werden. Insbesondere sind Installationskosten und ein Installationsaufwand verringert. Weiterhin sind eine Installation und Konfiguration oder Rekonfiguration des Messgeräts im Wesentlichen vereinfacht. Mittels der Anbindungsmöglichkeit des mobilen Geräts muss ein Verbraucher oder Kunde die Verbrauchsdaten nicht mehr über eine herkömmliche, kleine Anzeige der Verbrauchswerterfassungseinheit ablesen. Beispielsweise umfassen Verbrauchswerterfassungseinheiten achtstellige Anzeigen, wie beispielsweise einen so genannten LCD-Bildschirm. Insbesondere sind weitere Darstellungs- und Informationsausgaben der übermittelten Daten, wie graphische Darstellungen, zum Beispiel Verbrauchsdatenkurvenverläufe , auf dem mobilen Gerät ermöglicht.

Eine Ausgestaltung der Verbrauchswerterfassungseinheit sieht vor, dass die erste Kommunikationsschnittstelle in einem Ultrahochfrequenzband (kurz: UHF-Band) arbeitet, insbesondere sendet und empfängt. Erfindungsgemäß ist die erste Kommunikationsschnittstelle eine Weitfeldkommunikationsschnittstelle. Insbesondere sendet oder empfängt die erste Kommunikationsschnittstelle in einem so genannten ISM-Band (kurz für: Industrial, Scientific and Medical Band). Beispielsweise umfasst das Messgerät eine Antenne. Insbesondere können Funkfrequenzen in einem so genannten UHF-ISM-Band über die erste Kommunikationsschnittstelle zur Datenübertragung verwendet werden. Die erste Kommunikationsschnittstelle ist über große Distanzen, d. h. räumliche Entfernungen, betreibbar. Beispielsweise sind im Ultrahochfrequenzbereich elektromagnetische Wellen in einem Frequenzband von 300 MHz bis 3000 MHz verwendbar.

Eine weitere Ausgestaltung der Verbrauchswerterfassungseinheit sieht vor, dass die zweite Kommunikationsschnittstelle in einem Hochfrequenzband (kurz: HF-Band) arbeitet, insbesondere sendet und empfängt. Beispielsweise ist die zweite Kommunikationsschnittstelle eine Nahfeldkommunikationsschnittstelle (''NFC", kurz für: Near Field Communication). Die zweite Kommunikationsschnittstelle ist über kurze Distanzen, d. h. kurze räumliche Entfernungen, betreibbar. Beispielsweise sind im Hochfrequenzbereich Funkwellen, insbesondere Radiowellen, in einem Frequenzbereich von 3 MHz bis 30 MHz verwendbar. Zum Beispiel basiert die zweite Kommunikationsschnittstelle auf einem internationalen Übertragungsstandard zum kontaktlosen Austausch von Daten, wie zum Beispiel eine Bluetooth-Verbindung. Darüber hinaus können die Daten per elektromagnetischer Induktion ausgetauscht. Weiterhin ist möglich, dass die Kommunikation über einen geringen Abstand zwischen der Verbrauchswerterfassungseinheit, insbesondere dem Messgerät, und dem mobilen Gerät erfolgt. Alternativ oder zusätzlich ist möglich, dass die Kommunikation über eine unmittelbare Paarung, insbesondere eine Berührung, des mobilen Geräts mit der Verbrauchswerterfassungseinheit, insbesondere dem Messgerät, erfolgt.

Gemäß einer möglichen Ausführungsform ist das Messgerät ausgebildet, aus Funksignalen gewonnene elektrische Energie in die zweite Kommunikationsschnittstelle einzuspeisen. Insbesondere ist das Messgerät ausgebildet, aus den von dem mobilen Gerät bereitgestellten Funksignalen elektrische Energie zu gewinnen, um mit dieser zumindest die zweite Kommunikationsschnittstelle zu versorgen. Mit anderen Worten: Die zweite Kommunikationsschnittstelle wird durch Energiegewinnung aus den von dem mobilen Gerät ausgesendeten Funksignalen versorgt. Zum Beispiel fungiert die zweite Kommunikationsschnittstelle wie ein passives Speicherelement, welches, wenn es mit dem mobilen Gerät in Verbindung steht, Daten austauschen kann, während es durch die Energiegewinnung versorgt wird. Beispielsweise basiert die Energiegewinnung auf einer so genannten Energy Harversting-Methode.

Die erfindungsgemäße Vorrichtung umfasst eine Verbrauchswerterfassungseinheit mit zumindest einem Messgerät, insbesondere Messzähler, zur Erfassung von Daten, insbesondere von Verbrauchsdaten, einen zentralen Server und ein mobiles Gerät. Zur Übermittlung der Daten der Verbrauchswerterfassungseinheit an den zentralen Server ist eine erste drahtlose Kommunikationsschnittstelle vorgesehen, die mit dem zentralen Server koppelbar ist. Beispielsweise umfasst das Messgerät oder die Verbrauchswerterfassungseinheit die erste drahtlose Kommunikationsschnittstelle. Zur Übermittlung der Daten der Verbrauchswerterfassungseinheit an das mobile Gerät umfasst das Messgerät oder die Verbrauchswerterfassungseinheit eine zweite drahtlose Kommunikationsschnittstelle, die mit dem mobilen Gerät koppelbar ist. Darüber hinaus umfasst das mobile Gerät eine drahtlose Kommunikationsschnittstelle, wobei auf dem mobilen Gerät eine Auslesesoftware installiert ist, und wobei das mobile Gerät eingerichtet ist, nach Start der Auslesesoftware als Daten Verbrauchsdaten vom Messgerät anzufordern und zu empfangen und auf Anforderung die empfangenen Verbrauchsdaten in ein lesbares Format umzuwandeln und auszugeben.

In einer Ausführungsform ist auf dem mobilen Gerät eine Konfigurationssoftware installiert, wobei das mobile Gerät eingerichtet ist, nach Start der Konfigurationssoftware Betriebsparameter des Messgeräts einzustellen.

Gemäß einer möglichen Ausführungsform sind unterschiedliche Betriebsparameter von dem zentralen Server vorgegeben, wobei das mobile Gerät ausgebildet ist, sich mit dem zentralen Server zu verbinden und die bereitgestellten Betriebsparameter anzufordern.

In einer weiteren Ausführungsform ist die Konfigurationssoftware eingerichtet, vor Zugangsgewährung zu den Betriebsparametern des Messgeräts eine Authentifizierung eines Nutzers durchzuführen.

Zum Beispiel ist die Konfigurationssoftware eine akkreditierte mobile Anwendung für Installateure. Diese Anwendung wird authentifizierten Nutzern zur Verfügung gestellt, wobei die Anwendung auf das dem Nutzer zugeordnete mobile Gerät installiert werden kann. Ein Authentifizierungsprozess des Nutzers, beispielsweise einen Installateurs, für die mobile Anwendung wird beispielsweise durch den zentralen Server, insbesondere eine so genannte Cloud, und über einen Internetzugang des mobilen Geräts bereitgestellt. Darüber können Anmeldeinformationen des Nutzers überprüft werden. Jedes Messgerät, insbesondere dessen Sensor, verwendet beispielsweise einen bestimmten Satz von Betriebsparametern, die ein Betriebsverhalten des Messgeräts definieren. Zum Beispiel geben die Betriebsparameter einen Datenleseintervall und Funkübertragungsintervall vor. Weiterhin umfassen die Betriebsparameter Kalibierdaten für eine bestimmte Positionierung und Ausrichtung des Messgeräts, insbesondere dessen Sensor. Diese Betriebsparameter sind über die zweite Kommunikationsschnittstelle des Messgeräts oder der Verbrauchswerterfassungseinheit konfigurierbar, wobei der authentifizierte Nutzer Werte eingibt und/oder Werte aus einer vordefinierten Liste auswählt. Die vordefinierte Liste wird beispielsweise über den zentralen Server an das mobile Gerät übermittelt oder für das mobile Gerät bereitgestellt. Die Darstellung der Liste erfolgt beispielsweise über eine grafische Benutzeroberfläche des mobilen Geräts. Über diese Benutzeroberfläche kann der Nutzer Konfigurationsdaten in einen Konfigurationsspeicher bzw. Betriebsparameterspeicher des Messgeräts und/oder der Verbrauchswerterfassungseinheit ändern, einstellen und ergänzen.

In einer Weiterbildung sind die Betriebsparameter auf dem mobilen Gerät speicherbar. Wenn der Nutzer mehrere Messgeräte konfigurieren muss, kann der Nutzer ausgewählte Betriebsparameter in seinem mobilen Gerät hinterlegen, die dann in einfacher Weise bei einem Verbindungsaufbau mit dem nächsten Messgerät übertragen werden können.

Des Weiteren ist beispielsweise eine Identifikationsnummer der Verbrauchswerterfassungseinheit über die zweite Kommunikationsschnittstelle bereitgestellt. Mittels des mobilen Geräts ist diese Identifikationsnummer ablesbar. Die Identifikationsnummer kann anschließend von dem mobilen Gerät an den zentralen Server weitergeleitet werden, so dass bereits hinterlegte oder einzustellende Betriebsparameter des Messgeräts der Verbrauchswerterfassungseinheit direkt zugeordnet werden können. Insbesondere ist ermöglicht, auf spezielle Vorrichtungen nach so genanntem IrDa-Standard (Infrared Data Association) in den Verbrauchswerterfassungseinheiten und speziellen Ableseeinheiten zu verzichten. Dadurch können Installations- und Herstellungskosten sowie ein Herstellungsaufwand verringert werden.

In einer möglichen Ausführungsform ist das mobile Gerät des Verbrauchers ein mobiles Telefon oder ein Tablet Computer. Auf dem mobilen Gerät des Nutzers, insbesondere des Verbrauchers und Kunden, ist zum Auslesen der Daten des Messgerätes oder der Messgeräte des Verbrauchers eine Auslesesoftware installiert, die bei Bedarf oder Anforderung aktivierbar ist.

Gemäß einer Weiterbildung umfasst das mobile Gerät eine Speichereinheit zur Speicherung der empfangenen Daten, insbesondere von Verbrauchsdaten des Messgerätes.

In einer weiteren Ausführungsform umfasst das mobile Gerät des Verbrauchers eine Anzeigeeinheit, die eingerichtet ist, die empfangenen Daten, insbesondere Verbrauchsdaten, mit statistischen Daten in einem lesbaren Format auszugeben, insbesondere auf der Anzeigeeinheit.

Darüber hinaus kann das mobile Gerät eingerichtet sein, die an den zentralen Server übertragenen Daten zu den Betriebsparametern des Messgeräts in Form einer

Vergangenheitsstatistik vom zentralen Server zu empfangen und auf der Anzeigeeinheit in einem lesbaren Format auszugeben. Somit ist es dem Nutzer ermöglicht, Betriebsverhalten des Messgeräts in der Vergangenheit zu überprüfen. Zusätzlich kann der Nutzer auch die zurückliegenden verwendeten Betriebsparameter mit aktuellen vorgegebenen Betriebsparametern vergleichen.

Gemäß einer Weiterbildung der Vorrichtung sind die Auslesesoftware und die Konfigurationssoftware von dem zentralen Server ladbar und auf dem mobilen Gerät speicherbar.

Ausführungsbeispiele der Erfindung werden im Folgenden anhand von Zeichnungen näher erläutert.

Darin zeigen:
- Figur 1: schematisch ein Ausführungsbeispiel einer erfindungsgemäßen Verbrauchswerterfassungseinheit zur Übermittlung von mittels eines Messgeräts erfassten Daten, insbesondere Verbrauchsdaten, an einen zentralen Server und an ein mobiles Gerät,
- Figur 2A: schematisch ein Ausführungsbeispiel einer Verbrauchswerterfassungseinheit mit einem Messgerät mit zwei drahtlosen Kommunikationsschnittstellen zur Übermittlung erfasster Daten, insbesondere Verbrauchsdaten, an einen zentralen Server und an ein mobiles Gerät,
- Figur 2B: schematisch ein weiteres Ausführungsbeispiel einer Verbrauchswerterfassungseinheit mit einem Messgerät mit zwei drahtlosen Kommunikationsschnittstellen zur Übermittlung erfasster Daten, insbesondere Verbrauchsdaten, an einen zentralen Server und an ein mobiles Gerät,
- Figur 3: schematisch eine Vorrichtung zur Übermittlung von Daten einer Verbrauchswerterfassungseinheit an ein mobiles Gerät eines Nutzers und an einen zentralen Server beispielsweise eines Versorgungsunternehmens, und
- Figur 4: schematisch ein Verbrauchsdiagramm.

Einander entsprechende Teile und physikalische Größen sind in allen Figuren mit den gleichen Bezugszeichen versehen.

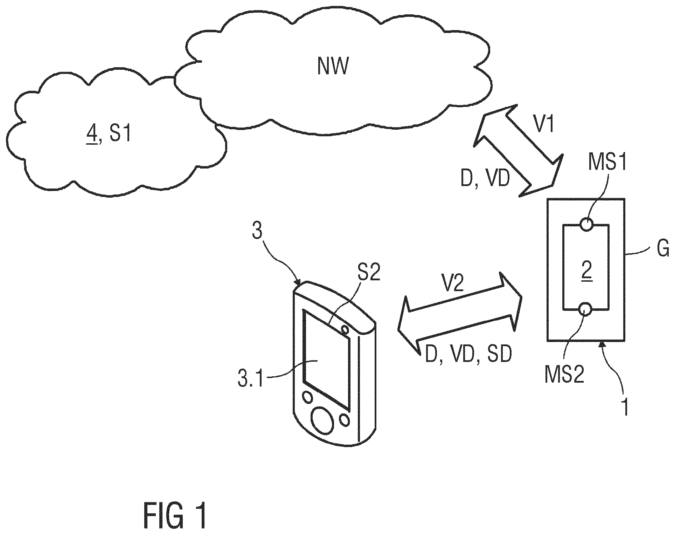

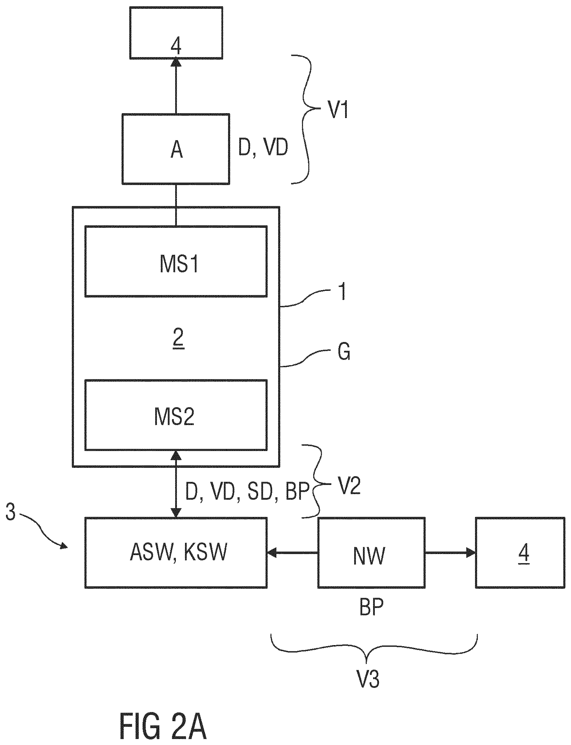

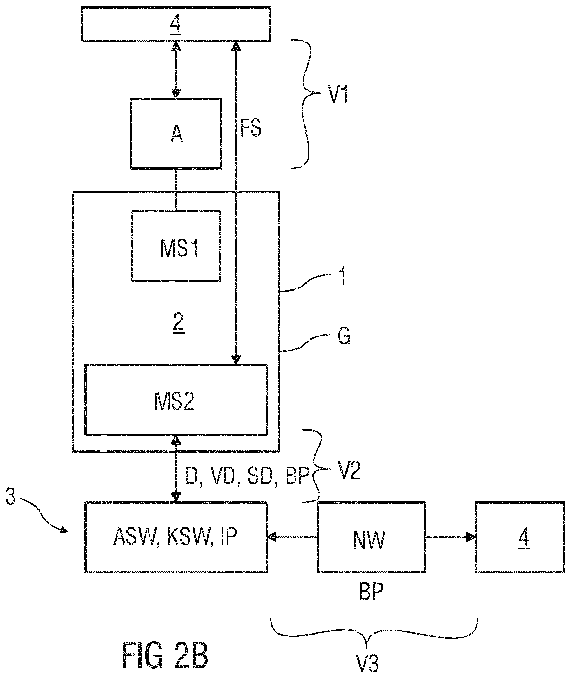

Die **Figuren 1****,** **2A** **und** **2B** zeigen jeweils eine erfindungsgemäße Verbrauchswerterfassungseinheit 1 zur Übermittlung von Daten D, wie Verbrauchsdaten VD. Die Verbrauchswerterfassungseinheit 1 umfasst ein Messgerät 2, insbesondere in Form einer Sensoreinheit, zur Erfassung von messbaren Werten.

Die Verbrauchswerterfassungseinheit 1 ist beispielsweise ein stationäres, elektronisches Verbrauchswertmessgerät. Beispielsweise ist die Verbrauchswerterfassungseinheit 1 ein stationärer Wärmeverbrauchs-, Strom-, Wasser- oder Gaszähler. Eine solche Verbrauchswerterfassungseinheit 1 ist beispielsweise in einer Wohnung oder einem Haus eines Verbrauchers an einer Verbrauchsstelle, zum Beispiel an einem Heizkörper oder einer Mediumleitung, installiert. Üblicherweise sind in einer Wohnung oder einem Haus eines Nutzers, insbesondere des Verbrauchers, mehrere Verbrauchswerterfassungseinheiten 1 installiert. Üblicherweise gibt es für jedes Messgerät 2 Verordnungen zur genauen Erfassung und Bestimmung des Verbrauchs V des jeweiligen Mediums. Dabei wird das jeweilige Medium häufig in einer Einheit erfasst und bestimmt, die für den Verbraucher nicht lesbar ist. Um beispielsweise den Wärme-/Energieverbrauch in der Abrechnungseinheit kWh (thermisch) nach Bundestarifordnung zu erhalten, muss je nach Energieart zum Beispiel für Gas der Gasverbrauch (volumetrisch) in Kubikmetern (m³), eine Zustandszahl (normierte Zahl, berücksichtigt mittleren Luftdruck, Gasdruck und Gastemperatur) und ein Abrechnungsbrennwert (kWh/m³, normierter Wert, berücksichtigt Schwankungen im Energiegehalt des Gases) bestimmt und miteinander multipliziert werden.

Die vorliegende Erfindung ermöglicht, dass die Daten D der stationären, elektronischen Verbrauchswerterfassungseinheit 1 jeweils an ein mobiles Gerät 3 eines Nutzers, insbesondere eines Verbrauchers und/oder Kunden, und parallel an einen zentralen Server 4 übermittelbar sind.

Die Verbrauchswerterfassungseinheit 1 ist dabei eingerichtet, direkt Verbrauchswerte zu erfassen und diese als Daten D über zwei integrierte Kommunikationsschnittstellen MS1, MS2 zu übertragen.

Das Messgerät 2 der Verbrauchswerterfassungseinheit 1 umfasst dazu zwei drahtlose Kommunikationsschnittstellen MS1, MS2 zur Übermittlung der erfassten Daten D, insbesondere in Form von Verbrauchsdaten VD. Die drahtlosen Kommunikationsschnittstellen MS1, MS2 sind beispielsweise jeweils als Funkschnittstelle ausgebildet.

Eine erste drahtlose Kommunikationsschnittstelle MS1 ist ausgebildet, das Messgerät 2 mit dem zentralen Server 4 zu verbinden. Hierzu umfasst der zentrale Server 4 eine mit der ersten Kommunikationsschnittstelle MS1 koppelbare Kommunikationsschnittstelle S1. Insbesondere werden als Daten D Verbrauchsdaten VD an den zentralen Server 4 zur Verbrauchsabrechnung übertragen. Beispielsweise ist der zentrale Server 4 eine so genannte Cloud oder eine andere externe Recheneinheit. Zum Beispiel hat ein Versorgungsunternehmen, ein Abrechnungsunternehmen, eine Wohnungswirtschaft oder ein Vermieter Zugriff auf den zentralen Server 4.

Der zentrale Server 4 ist beispielsweise ein sogenannter Cloud-Speicherplatz, welcher eingerichtet ist, mit dem Messgerät 2 beispielsweise über ein drahtloses oder drahtgebundenes Netzwerk NW, wie ein globales Netzwerk NW, Daten D des Messgeräts 2 zu empfangen.

Eine zweite drahtlose Kommunikationsschnittstelle MS2 ist ausgebildet, dass Messgerät 2 mit dem mobilen Gerät 3 des Nutzers, insbesondere Verbrauchers, und/oder eines Ablesers einer Ablesefirma zu verbinden. Hierzu umfasst das mobile Gerät 3 eine mit der zweiten Kommunikationsschnittstelle MS2 koppelbare Kommunikationsschnittstelle S2. Die zweite drahtlose Kommunikationsschnittstelle MS2 ist hierzu beispielsweise sowohl als gesicherte als auch als öffentliche Kommunikationsschnittstelle MS2 eingerichtet.

Dem Verbraucher ist es damit ermöglicht, sich seine Verbrauchsdaten VD in einem für ihn lesbaren Format, beispielsweise das betreffende Medium, wie Gas oder Wasser, volumetrisch in Kubikmetern, mit seinem mobilen Gerät 3 anzeigen zu lassen. Das mobile Gerät 3 des Verbrauchers ist beispielsweise ein mobiles Telefon oder ein Tablet und umfasst zumindest eine optische Anzeigeeinheit 3.1. Über die Anzeigeeinheit 3.1 können dem Verbraucher die Verbrauchsdaten VD beispielsweise grafisch, tabellarisch oder in einem anderen gewünschten Darstellungsformat dargestellt werden. Die an das mobile Gerät 3 gesendeten Verbrauchsdaten VD sind zur Information des Verbrauchers vorgesehen. Zum Beispiel können die Daten D, insbesondere sowohl aktuelle Verbrauchsdaten VD und/oder vorhergehende oder zurückliegende Verbrauchsdaten VD (auch Vergangenheitswerte genannt) und/oder statistische Daten SD angezeigt werden. Der Verbraucher kann Analysen und Statistiken beispielsweise über seinen Verbrauchsverlauf erstellen lassen.

Die erste Kommunikationsschnittstelle MS1 arbeitet beispielsweise in einem Ultrahochfrequenzband. Beispielsweise ist die erste Kommunikationsschnittstelle MS1 eine Weitfeldkommunikationsschnittstelle. Insbesondere sendet und empfängt die erste Kommunikationsschnittstelle MS1 in einem so genannten ISM-Band. Beispielsweise können Funkfrequenzen in einem so genannten UHF-ISM-Band über die erste Kommunikationsschnittstelle MS1 verwendet werden. Die erste Kommunikationsschnittstelle MS1 ist über große Distanzen, d. h. räumliche Entfernungen, betreibbar. Beispielsweise sind im Ultrahochfrequenzbereich elektromagnetische Wellen in einem Frequenzband von 300 MHz bis 3000 MHz verwendbar.

Beispielsweise umfasst das Messgerät 2 eine, wie in Figuren 2A und 2B angedeutet, Antenne A.

Die zweite drahtlose Kommunikationsschnittstelle MS2 ist beispielsweise mit einem Funkstandard, insbesondere einem auf RFID-Technik basierenden internationalen Funkübertragungsstandard, eingerichtet, der eine drahtlose Datenübertragung in kurzen Funkreichweiten ermöglicht. Eine solche Kommunikationsschnittstelle MS2 wird auch als NFC-Schnittstelle bezeichnet. Die NFC-Schnittstelle ermöglicht eine sichere und schnelle Übertragung der Daten D zwischen dem Messgerät 2 und dem mobilen Gerät 3. Die zweite Kommunikationsschnittstelle MS2 ist über kleine Distanzen, d. h. räumliche Entfernungen, betreibbar. Beispielsweise sind im Hochfrequenzbereich Funkwellen, insbesondere Radiowellen, in einem Frequenzbereich von 3 MHz bis 30 MHz verwendbar.

Alternativ können die Kommunikationsschnittstellen MS1, MS2 als Bluetooth- oder WLAN-Schnittstellen ausgebildet sein.

Das Messgerät 2 der Verbrauchswerterfassungseinheit 1 kann eine Steuereinheit umfassen. Alternativ kann eine separate Steuereinheit (nicht näher dargestellt) in der Verbrauchswerterfassungseinheit 1 vorgesehen sein. Das Messgerät 2 und die Steuereinheit sind datentechnisch miteinander gekoppelt. Darüber hinaus kann die Verbrauchswerterfassungseinheit 1 einen nicht näher dargestellten Speicher zur Speicherung der Verbrauchswerte (auch Verbrauchsdaten VD genannt) umfassen. Die Verbrauchswerterfassungseinheit 1 ist als ein stationäres Montagemodul ausgebildet und umfasst ein Gehäuse G, welches das Messgerät 2 und die zwei drahtlosen Kommunikationsschnittstellen MS1, MS2 umgibt und kapselt. Das Gehäuse G kann ein- oder mehrteilig ausgebildet sein.

Zum Auslesen und Darstellen der Verbrauchsdaten VD umfasst erfindungsgemäß das mobile Gerät 3 eine Auslesesoftware ASW. Das mobile Gerät 3 des Verbrauchers ist eingerichtet, nach Start der Auslesesoftware ASW als Daten D Verbrauchsdaten VD vom

Messgerät 2 anzufordern und zu empfangen und auf Anforderung die empfangenen Verbrauchsdaten VD in das lesbare Format, zum Beispiel ein volumetrisches Format, umzuwandeln und auszugeben.

Des Weiteren ist das Messgerät 2 über die zweite Kommunikationsschnittstelle MS2 konfigurierbar ausgebildet. Beispielsweise sind in Figuren 2A und 2B dargestellte Betriebsparameter BP des Messgeräts 2 konfigurierbar. Mittels der zweiten Kommunikationsschnittstelle MS2 ist eine sichere Konfiguration für beispielsweise einen Installateur der Verbrauchswerterfassungseinheit 1 und/oder des Messgeräts 2 ermöglicht.

Figuren 2A und 2B zeigen jeweils schematisch Ausführungsbeispiele einer Verbrauchswerterfassungseinheit 1 mit einem Messgerät 2 mit zwei drahtlosen Kommunikationsschnittstellen MS1, MS2 zur Übermittlung erfasster Daten D, insbesondere Verbrauchsdaten VD, an einen zentralen Server 4 und an ein mobiles Gerät 3 über zugehörige zwei Kommunikationsverbindungen V1, V2.

Eine erste Kommunikationsverbindung V1 zwischen dem Messgerät 2 und dem zentralen Server 4 ist als eine gesicherte Kommunikationsverbindung zur Übertragung von Verbrauchsdaten VD ausgebildet.

Eine zweite Kommunikationsverbindung V2 zwischen dem Messgerät 2 und dem mobilen Gerät 3 ist ebenfalls als eine gesicherte Kommunikationsverbindung zur Übertragung der Verbrauchsdaten VD und weiterer Daten D, wie Statistikdaten SD und/oder Konfigurationsdaten, wie einstellbare Betriebsparameter BP, ausgebildet.

Die Verbrauchswerterfassungseinheit 1 ist jeweils als ein stationäres, elektronisches Verbrauchsmessgerät ausgebildet.

Zur Konfiguration des Messgeräts 2 umfasst erfindungsgemäß das mobile Gerät 3 eine Konfigurationssoftware KSW. Zum Beispiel ist die Konfigurationssoftware KSW eine akkreditierte mobile Anwendung für Installateure. Diese Anwendung wird authentifizierten Nutzern zur Verfügung gestellt, wobei die Anwendung auf das dem Nutzer zugeordnete mobile Gerät 3 installiert werden kann.

Jedes Messgerät 2, insbesondere dessen Sensor, verwendet beispielsweise einen bestimmten Satz von Betriebsparametern BP, die ein Betriebsverhalten des Messgeräts 2 definieren. Zum Beispiel geben die Betriebsparameter BP einen Datenleseintervall und Funkübertragungsintervall vor. Weiterhin umfassen die Betriebsparameter BP Konfigurations-, Kalibrierdaten und/oder Steuerdaten für eine bestimmte Positionierung und Ausrichtung des Messgeräts 2, insbesondere dessen Sensors.

Diese Betriebsparameter BP sind über die zweite Kommunikationsschnittstelle MS2 des Messgeräts 2 konfigurierbar, aktualisierbar und/oder vorgebbar, wobei der authentifizierte Nutzer am mobilen Gerät 3 beispielsweise Werte eingibt und/oder Werte aus einer vordefinierten Liste auswählt. Die vordefinierte Liste wird beispielsweise über den zentralen Server 4 an das mobile Gerät 3 übermittelt oder für das mobile Gerät 3 bereitgestellt oder direkt am mobilen Gerät 3 vom Installateur eingegeben. Die Darstellung der Liste erfolgt beispielsweise über die optische Anzeigeeinheit 3.1.

Der zentrale Server 4 ist beispielsweise eingerichtet, mit dem mobilen Gerät 3 beispielsweise über ein drahtloses oder drahtgebundenes Netzwerk NW, insbesondere ein Ethernet-Netzwerk und/oder einen herkömmlichen Internetzugang, Betriebsparameter BP, insbesondere neue, zu aktualisierende, aktuelle und/oder vergangene Betriebsparameter BP, des Messgeräts 2 auszutauschen.

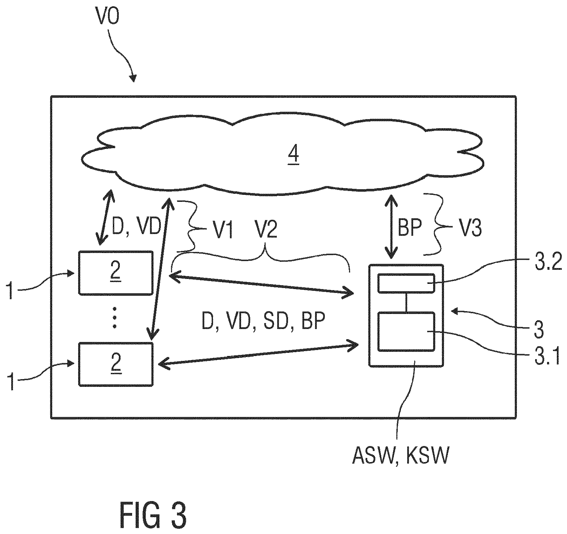

In einer Weiterbildung ist das mobile Gerät 3 eingerichtet, die an den zentralen Server 4 übertragenen Daten D zu den Betriebsparametern BP des Messgeräts 2 in Form einer Vergangenheitsstatistik direkt vom zentralen Server 4 (wie in Figur 3 dargestellt) und/oder über das Netzwerk NW (wie in Figuren 2A, 2B dargestellt) zu empfangen. Die Betriebsparameter BP sind auf der Anzeigeeinheit 3.1 in lesbarer Form ausgebbar. Somit ist es dem Nutzer ermöglicht, das Betriebsverhalten des Messgeräts 2 in der Vergangenheit zu überprüfen. Zusätzlich kann der Nutzer auch die zurückliegenden verwendeten Betriebsparameter BP mit aktuellen vorgegebenen und aktiven Betriebsparametern BP des Messgeräts 2 vergleichen. Hierzu ist das mobile Gerät 3 sowohl mit dem Messgerät 2 über die zweite Kommunikationsschnittstelle MS2 und die zweite Kommunikationsverbindung V2 als auch mit dem zentralen Server 4 über das Netzwerk NW und eine zugehörige dritte Kommunikationsverbindung V3 datentechnisch gekoppelt.

Wie in Figur 2B dargestellt, ist die Verbindung zwischen der Antenne A und dem zentralen Server 4 bidirektional ausgebildet. In einem Installationsmodus, welcher mittels des mobilen Geräts 3 aktivierbar ist, kann der Installateur über die zweite Kommunikationsschnittstelle MS2 den Status des Installationsmodus, beispielsweise anhand von übertragenen aktuellen Betriebsparametern BP, überprüfen. Mit seinem mobilen Gerät 3, insbesondere einem mobilen Empfangsgerät, ist sowohl der zentrale Server 4 als auch das zu paarende Messgerät 2 ansprechbar. Insbesondere kann dadurch der Installationsmodus in einfacher Weise überprüft und ausgestaltet werden, wenn dazu nötige Informationen und/oder Betriebsparameter BP bidirektional kommuniziert werden. Im Installationsmodus sind beispielsweise Betriebsparameter BP des Messgeräts 2 einstellbar. Beispielsweise ist das Messgerät 2 über die im mobilen Gerät 3 hinterlegte Konfigurationssoftware KSW und/oder über ein im mobilen Gerät 3 hinterlegtes Installationsprogramm IP in den Installationsmodus überführbar. Um zu verhindern, dass unautorisierte Personen im Besitz des mobilen Geräts 3 Zugriff auf das Messgerät 2 erhalten können, ist vorgesehen, dass eine Autorisation serverseitig erteilt wird. Beispielsweise muss zur Freigabe eines Zugriff auf das Messgerät 2 durch das mobile Gerät 3 eine Autorisation von dem mobilen Gerät 3 oder dem Messgerät 2 am Server 4 angefordert und von dem Server 4 erteilt werden, bevor das mobile Gerät 3 den Konfigurationszugriff für das Messgerät 2 erhält.

Durch die Ausbildung der Verbrauchswerterfassungseinheit 1 mit zwei separaten Kommunikationsschnittstellen MS1, MS2 ist eine solche Autorisationsabfrage und -freigabe vereinfacht und insbesondere deutlich beschleunigt. Insbesondere erhält ein Installateur oder gewerbsmäßiger Nutzer, wie Ableser, einfach und schnell Zugriff auf die Verbrauchswerterfassungseinheit 1. Hierdurch ist wiederum eine schnellere und zielgerichtete Übertragung von relevanten Daten D, wie Verbrauchsdaten VD, ermöglicht, da der Installateur oder Nutzer einfach und schnell entsprechende Einstellungen an der Verbrauchswerterfassungseinheit 1 durch Übertragung und Änderung/Aktualisierung von entsprechenden Betriebsparametern BP vornehmen kann.

In einer Weiterbildung ist die zweite Kommunikationsschnittstelle MS2 insbesondere zur Konfiguration der Verbrauchswerterfassungseinheit 1 über den zentralen Server 4 aus freischaltbar. Eine Verbindung und eine Übertragung zwischen dem mobilen Gerät 3 und dem Messgerät 2 können dadurch beispielsweise konfiguriert werden. Mit anderen Worten: Eine Freischaltung FS der zweiten Kommunikationsschnittstelle MS2, um sich mit beispielsweise jeweils unterschiedlichen mobilen Geräten 3 zu verbinden, erfolgt über den Server 4.

**Figur 3** zeigt schematisch eine Vorrichtung VO zur drahtlosen Übermittlung von Daten D einer oder mehrerer Verbrauchswerterfassungseinheiten 1 an ein mobiles Gerät 3 eines Nutzers, insbesondere Verbrauchers oder Kunden, und an einen zentralen Server 4 beispielsweise eines Versorgungsunternehmens.

Auf dem mobilen Gerät 3 ist beispielsweise in Form einer Applikationssoftware (auch kurz App genannt) die Auslesesoftware ASW und/oder die Konfigurationssoftware KSW installiert.

Das mobile Gerät 3 des Verbrauchers ist eingerichtet, nach Start der Konfigurationssoftware KSW und vor Gewährung eines Konfigurationszugangs eine Authentifizierung des Nutzers, insbesondere des Installateurs, durchzuführen. Zum Beispiel sind/ist das Messgerät 2 und/oder das mobile Gerät 3 ausgebildet, bei Erfassung eines Verbindungsaufbauversuchs über die zweite Kommunikationsschnittstelle MS2 und Aktivierung der Konfigurationssoftware KSW Authentifikationsinformationen des Nutzers abzufragen. Nach einer erfolgreichen Authentifizierung des Nutzers kann dieser auf die Betriebsparameter BP des Messgeräts 2 zugreifen. Die Betriebsparameter BP werden auf Anforderung, vom Nutzer oder vom zentralen Server 4, in ein für das mobile Gerät 3 darstellbares Format umgewandelt und auf diesem ausgegeben. Der Nutzer kann bei Bedarf über die zweite Kommunikationsschnittstelle MS2 die Betriebsparameter BP aktualisieren, ändern, ergänzen und/oder löschen.

Des Weiteren ist das mobile Gerät 3 des Verbrauchers eingerichtet, nach Start der Auslesesoftware ASW als Daten D Verbrauchsdaten VD vom Messgerät 2 anzufordern und zu empfangen und auf Anforderung die empfangenen Verbrauchsdaten VD in ein lesbares Format, zum Beispiel ein volumetrisches Format, umzuwandeln und auszugeben.

Beispielsweise umfasst das mobile Gerät 3 eine Anzeigeeinheit 3.1, auf welcher die empfangenen Verbrauchsdaten VD in einem für den Verbraucher lesbaren Format ausgegeben werden.

Zum Auslesen der Daten D des Messgerätes 2 oder der Messgeräte 2 des Verbrauchers ist die Auslesesoftware ASW auf dem mobilen Gerät 3 vom Verbraucher bei Bedarf oder auf Anforderung aktivierbar.

Beispielsweise sind die Auslesesoftware ASW und/oder die Konfigurationssoftware KSW auf dem mobilen Gerät 3 jeweils als Anwendersoftware vorinstalliert. Alternativ kann der Verbraucher diese Programme von dem zentralen Server 4 auf das mobile Gerät 3 laden und dort speichern und bei Bedarf oder auf Anforderung aktivieren.

Das mobile Gerät 3 kann darüber hinaus dazu eingerichtet sein, die empfangenen Daten D, wie die Verbrauchsdaten VD und statistischen Daten SD, in einem Speicher 3.2 zu speichern. Hierzu umfasst das mobile Gerät 3 eine Speichereinheit 3.2. Die Speichereinheit 3.2 kann ferner dazu eingerichtet sein, die empfangenen Daten D, insbesondere die Verbrauchsdaten VD und die statistischen Daten SD, des Messgerätes 2 für spätere Analysen zu speichern.

Darüber hinaus kann das mobile Gerät 3 eingerichtet sein, die vom Messgerät 2 empfangenen und optional gespeicherten Daten D, insbesondere sowohl aktuelle Verbrauchsdaten VD und/oder vorhergehende oder zurückliegende Verbrauchsdaten VD (auch Vergangenheitswerte genannt) und/oder statistische Daten SD miteinander zu vergleichen.

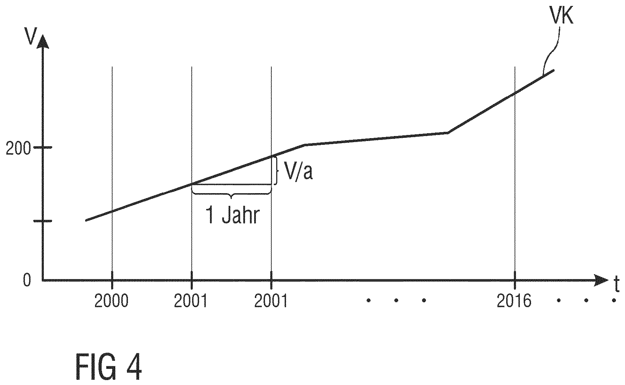

**Figur 4** zeigt schematisch ein Verbrauchsdiagramm.

Beispielsweise können die empfangenen Daten D, insbesondere die Verbrauchsdaten VD, mit statistischen Daten SD beispielsweise in Form einer Vergangenheitsstatistik oder einer Verbrauchskurve VK auf der Anzeigeeinheit 3.1 ausgeben werden. Beispielsweise können zurückliegende und gespeicherte Verbrauchsdaten VD mit aktuell empfangenen Verbrauchsdaten VD kumuliert und über die Zeit t auf der Anzeigeeinheit 3.1 ausgegeben werden. Hierdurch kann der Verbraucher den Verbrauch pro Jahr V/a und die Entwicklung des Verbrauchs pro Jahr V/a erfassen und überwachen.

Somit ist es dem Verbraucher ermöglicht, seinen Verbrauch V auch in der Vergangenheit zu überprüfen. Zusätzlich kann der Verbraucher auch die zurückliegenden Verbrauchsdaten VD mit den aktuellen Verbrauchsdaten VD vergleichen.

### BEZUGSZEICHENLISTE

- 1: Verbrauchswerterfassungseinheit
- 2: Messgerät
- 3: Mobiles Gerät
- 3.1: Anzeigeeinheit
- 3.2: Speichereinheit
- 4: Zentraler Server
- A: Antenne
- ASW: Auslesesoftware
- BP: Betriebsparameter
- D: Daten
- FS: Freischaltung
- G: Gehäuse
- IP: Installationsproramm
- KSW: Konfigurationssoftware
- MS1, MS2: Kommunikationsschnittstelle
- NW: Netzwerk
- SD: statistische Daten
- S1, S2: Kommunikationsschnittstelle
- t: Zeit
- V1: erste Kommunikationsverbindung
- V2: zweite Kommunikationsverbindung
- V3: dritte Kommunikationsverbindung
- V: Verbrauch
- VD: Verbrauchsdaten
- VK: Verbrauchskurve
- VO: Vorrichtung
- V/a: Verbrauch pro Jahr

## Patentansprüche

1. Vorrichtung (VO) zur Übermittlung von Daten (D) mit einer Verbrauchswerterfassungseinheit (1), insbesondere stationärer, elektronischer Verbrauchszähler, mit zumindest einem Messgerät (2) zur Erfassung von Daten (D) und einem mobilem Gerät (3), wobei
das Messgerät (2) zwei drahtlose Kommunikationsschnittstellen (MS1, MS2) zur Übermittlung der erfassten Daten (D) umfasst, wobei
- eine erste drahtlose Kommunikationsschnittstelle (MS1) als Weitfeldkommunikationsschnittstelle ausgebildet und eingerichtet ist, das Messgerät (2) mit zumindest einem zentralen Server (4) zu verbinden, und
- eine zweite drahtlose Kommunikationsschnittstelle (MS2) als Nahfeldkommunikationsschnittstelle ausgebildet und eingerichtet ist, das Messgerät (2) mit zumindest einem mobilen Gerät (3) eines Nutzers zu verbinden,
wobei die von dem Messgerät (2) erfassten Daten (D) über die zwei drahtlosen Kommunikationsschnittstellen (MS1, MS2) übertragbar sind,
wobei auf dem mobilen Gerät (3) eine Auslesesoftware (ASW) zum Anfordern, Empfangen und Ausgeben von Verbrauchsdaten (VD) und eine Konfigurationssoftware (KSW) als Anwendersoftware installiert sind, und
wobei mittels der Konfigurationssoftware (KSW) Betriebsparameter (BP) des Messgerätes (2) über die zweite drahtlose Kommunikationsschnittstelle (MS2) konfigurierbar sind.

2. Vorrichtung (VO) nach Anspruch 1, wobei das Messgerät (2) ausgebildet ist, als Daten (D) Verbrauchsdaten (VD) zur Verbrauchsabrechnung über die erste Kommunikationsschnittstelle (MS1) bereitzustellen.

3. Vorrichtung (VO) nach Anspruch 1 oder 2, wobei das Messgerät (2) ausgebildet ist, als Daten (D) Verbrauchsdaten (VD) und/oder statistische Daten (SD) zur Verbrauchsanalyse über die zweite Kommunikationsschnittstelle (MS2) bereitzustellen.

4. Vorrichtung (VO) nach einem der vorhergehenden Ansprüche, wobei das Messgerät (2) über die zweite Kommunikationsschnittstelle (MS2) konfigurierbar ausgebildet ist.

5. Vorrichtung (VO) nach Anspruch 4, wobei Betriebsparameter (BP) des Messgeräts (2) konfigurierbar sind.

6. Vorrichtung (VO) nach Anspruch 4 oder 5, wobei das Messgerät (2) ausgebildet ist, vor einem Konfigurationszugang eine Authentifizierung des Nutzers durchzuführen.

7. Vorrichtung (VO) nach einem der vorhergehenden Ansprüche, wobei die erste Kommunikationsschnittstelle (MS1) des Messgerätes (2) in einem Ultrahochfrequenzband arbeitet.

8. Vorrichtung (VO) nach einem der vorhergehenden Ansprüche, wobei die zweite Kommunikationsschnittstelle (MS2) des Messgerätes (2) in einem Hochfrequenzband arbeitet.

9. Vorrichtung (VO) nach einem der vorhergehenden Ansprüche, wobei das Messgerät (2) ausgebildet ist, aus Funksignalen gewonnene elektrische Energie in die zweite Kommunikationsschnittstelle (MS2) einzuspeisen.

10. Vorrichtung (VO) nach einem der vorhergehenden Ansprüche 1 bis 9, des Weiteren umfassend zumindest einen zentralen Server (4), wobei
- das mobile Gerät (3) eine drahtlose Kommunikationsschnittstelle (S2) umfasst, die mit der zweiten Kommunikationsschnittstelle (MS2) des Messgeräts (2) koppelbar ist,
- auf dem mobilen Gerät (3) zumindest die Auslesesoftware (ASW) installiert ist und das mobile Gerät (3) eingerichtet ist, nach Start der Auslesesoftware (ASW) als Daten (D) Verbrauchsdaten (VD) des Messgerätes (2) anzufordern und zu empfangen und auf Anforderung die empfangenen Verbrauchsdaten (VD) in ein lesbares Format umzuwandeln und auszugeben.

11. Vorrichtung (VO) nach Anspruch 10, wobei auf dem mobilen Gerät (3) die Konfigurationssoftware (KSW) installiert ist und das mobile Gerät (3) eingerichtet ist, nach Start der Konfigurationssoftware (KSW) Betriebsparameter (BP) des Messgerätes (2) einzustellen.

12. Vorrichtung (VO) nach Anspruch 11, wobei unterschiedliche Betriebsparameter (BP) von dem zentralen Server (4) bereitstellbar sind, wobei das mobile Gerät (3) ausgebildet ist, sich mit dem zentralen Server (4) zu verbinden und bereitgestellte Betriebsparameter (BP) anzufordern.

13. Vorrichtung (VO) nach Anspruch 11 oder 12, wobei die Konfigurationssoftware (KSW) eingerichtet ist, vor Zugangsgewährung zu den Betriebsparametern (BP) des Messgeräts (2) eine Authentifizierung eines Nutzers durchzuführen.

14. Vorrichtung (VO) nach einem der Ansprüche 10 bis 13, wobei das mobile Gerät (3) ein mobiles Telefon oder ein Tablet Computer ist.

## Claims

1. Apparatus (VO) for transmitting data (D), having a consumption value recording unit (1), in particular a stationary, electronic consumption meter, having at least one measuring device (2) for capturing data (D) and having a mobile device (3), wherein
the measuring device (2) comprises two wireless communication interfaces (MS1, MS2) for transmitting the captured data (D), wherein
- a first wireless communication interface (MS1) is designed as a wide-field communication interface and is configured to connect the measuring device (2) to at least one central server (4), and
- a second wireless communication interface (MS2) is designed as a near-field communication interface and is configured to connect the measuring device (2) to at least one mobile device (3) belonging to a user,
wherein the data (D) captured by the measuring device (2) are transmittable via the two wireless communication interfaces (MS1, MS2),
wherein read-out software (ASW) for requesting, receiving and outputting consumption data (VD) and configuration software (KSW) are installed as application software on the mobile device (3), and
wherein operating parameters (BP) of the measuring device (2) are configurable by means of the configuration software (KSW) via the second wireless communication interface (MS2).

2. Apparatus (VO) according to Claim 1, wherein the measuring device (2) is designed to provide, as data (D), consumption data (VD) for consumption billing via the first communication interface (MS1).

3. Apparatus (VO) according to Claim 1 or 2, wherein the measuring device (2) is designed to provide, as data (D), consumption data (VD) and/or statistical data (SD) for consumption analysis via the second communication interface (MS2).

4. Apparatus (VO) according to one of the preceding claims, wherein the measuring device (2) is designed to be configurable via the second communication interface (MS2).

5. Apparatus (VO) according to Claim 4, wherein operating parameters (BP) of the measuring device (2) are configurable.

6. Apparatus (VO) according to Claim 4 or 5, wherein the measuring device (2) is designed to authenticate the user before configuration access.

7. Apparatus (VO) according to one of the preceding claims, wherein the first communication interface (MS1) of the measuring device (2) operates in an ultrahigh frequency band.

8. Apparatus (VO) according to one of the preceding claims, wherein the second communication interface (MS2) of the measuring device (2) operates in a high frequency band.

9. Apparatus (VO) according to one of the preceding claims, wherein the measuring device (2) is designed to feed electrical energy obtained from radio signals into the second communication interface (MS2).

10. Apparatus (VO) according to one of the preceding Claims 1 to 9, further comprising at least one central server (4), wherein
- the mobile device (3) comprises a wireless communication interface (S2) which is couplable to the second communication interface (MS2) of the measuring device (2),
- at least the read-out software (ASW) is installed on the mobile device (3) and the mobile device (3) is configured to request and receive, as data (D), consumption data (VD) from the measuring device (2) after the read-out software (ASW) has been started and to convert the received consumption data (VD) into a readable format and to output them on request.

11. Apparatus (VO) according to Claim 10, wherein the configuration software (KSW) is installed on the mobile device (3) and the mobile device (3) is configured to set operating parameters (BP) of the measuring device (2) after the configuration software (KSW) has been started.

12. Apparatus (VO) according to Claim 11, wherein different operating parameters (BP) are providable by the central server (4), wherein the mobile device (3) is designed to connect to the central server (4) and to request provided operating parameters (BP).

13. Apparatus (VO) according to Claim 11 or 12, wherein the configuration software (KSW) is configured to authenticate a user before granting access to the operating parameters (BP) of the measuring device (2).

14. Apparatus (VO) according to one of Claims 10 to 13, wherein the mobile device (3) is a mobile telephone or a tablet computer.

## Revendications

1. Dispositif (VO) de transmission de données (D) comprenant une unité de mesure de valeurs de consommation (1), en particulier un compteur électronique fixe de consommation, ayant au moins un appareil de mesure (2) pour enregistrer des données (D) et un appareil mobile (3),
l'appareil de mesure (2) comprenant deux interfaces de communication sans fil (MS1, MS2) pour transmettre les données enregistrées (D),
- une première interface de communication sans fil (MS1) étant conçue et configurée en tant qu'interface de communication à champ étendu pour relier l'appareil de mesure (2) à au moins un serveur central (4), et
- une deuxième interface de communication sans fil (MS2) étant conçue et configurée en tant qu'interface de communication à champ proche pour relier l'appareil de mesure (2) à au moins un appareil mobile (3) d'un utilisateur,
les données (D) enregistrées par l'appareil de mesure (2) étant aptes à être transmises via les deux interfaces de communication sans fil (MS1, MS2),
un logiciel de lecture (ASW) destiné à demander, recevoir et éditer des données de consommation (VD) et un logiciel de configuration (KSW) étant installés sur l'appareil mobile (3) en tant que logiciels utilisateur, et
les paramètres de fonctionnement (BP) de l'appareil de mesure (2) étant aptes à être configurés au moyen du logiciel de configuration (KSW) via la deuxième interface de communication sans fil (MS2).

2. Dispositif (VO) selon la revendication 1, dans lequel l'appareil de mesure (2) est conçu pour fournir, sous forme de données (D), des données de consommation (VD) pour le décompte de la consommation via la première interface de communication (MS1).

3. Dispositif (VO) selon la revendication 1 ou la revendication 2, dans lequel l'appareil de mesure (2) est conçu pour fournir, en tant que données (D), des données de consommation (VD) et/ou des données statistiques (SD) pour l'analyse de la consommation via la deuxième interface de communication (MS2).

4. Dispositif (VO) selon l'une des revendications précédentes, dans lequel l'appareil de mesure (2) est conçu de manière configurable via la deuxième interface de communication (MS2).

5. Dispositif (VO) selon la revendication 4, dans lequel les paramètres de fonctionnement (BP) de l'appareil de mesure (2) sont configurables.

6. Dispositif (VO) selon la revendication 4 ou la revendication 5, dans lequel l'appareil de mesure (2) est conçu pour effectuer une authentification de l'utilisateur avant un accès à la configuration.

7. Dispositif (VO) selon l'une des revendications précédentes, dans lequel la première interface de communication (MS1) de l'appareil de mesure (2) fonctionne dans une bande de fréquences ultra-hautes.

8. Dispositif (VO) selon l'une des revendications précédentes, dans lequel la deuxième interface de communication (MS2) de l'appareil de mesure (2) fonctionne dans une bande haute fréquence.

9. Dispositif (VO) selon l'une des revendications précédentes, dans lequel l'appareil de mesure (2) est conçu pour alimenter la deuxième interface de communication (MS2) en énergie électrique obtenue à partir de signaux radio.

10. Dispositif (VO) selon l'une des revendications précédentes 1 à 9, comprenant en outre au moins un serveur central (4), dans lequel
- l'appareil mobile (3) comprend une interface de communication sans fil (S2) qui est apte à être reliée à la deuxième interface de communication (MS2) de l'appareil de mesure (2),
- au moins le logiciel de lecture (ASW) est installé sur l'appareil mobile (3), et l'appareil mobile (3) est configuré pour demander et recevoir, après le démarrage du logiciel de lecture (ASW), les données de consommation (VD) de l'appareil de mesure (2) sous forme de données (D) et, sur demande, pour convertir les données de consommation (VD) reçues dans un format lisible et les éditer.

11. Dispositif (VO) selon la revendication 10, dans lequel le logiciel de configuration (KSW) est installé sur l'appareil mobile (3), et l'appareil mobile (3) est configuré pour, après le démarrage du logiciel de configuration (KSW), régler les paramètres de fonctionnement (BP) de l'appareil de mesure (2).

12. Dispositif (VO) selon la revendication 11, dans lequel différents paramètres de fonctionnement (BP) sont aptes à être fournis par le serveur central (4), l'appareil mobile (3) étant conçu pour se connecter au serveur central (4) et pour demander les paramètres de fonctionnement (BP) fournis.

13. Dispositif (VO) selon la revendication 11 ou la revendication 12, dans lequel le logiciel de configuration (KSW) est configuré pour effectuer une authentification d'un utilisateur avant d'accorder l'accès aux paramètres de fonctionnement (BP) de l'appareil de mesure (2).

14. Dispositif (VO) selon l'une des revendications 10 à 13, dans lequel l'appareil mobile (3) est un téléphone mobile ou une tablette électronique.
